# EUROPEAN PATENT APPLICATION

(11) **EP 4 319 189 A1**
(43) Date of publication of application: **07.02.2024**
(21) Application number: 22788437.6
(22) Date of filing: 13.04.2022
(51) Int. Cl.: H04R 1/06, H04R 1/10, H04B 1/3827

(54) **ELECTRONIC DEVICE COMPRISING ANTENNA**

(30) Priority: 13.04.2021 KR 20210047777
(71) Applicant: Samsung Electronics Co., Ltd., Suwon-si, Gyeonggi-do 16677 (KR)
(72) Inventor: KANG, Woosuk, Suwon-si Gyeonggi-do 16677 (KR); KIM, Sewoong, Suwon-si Gyeonggi-do 16677 (KR); KIM, Jeonghoon, Suwon-si Gyeonggi-do 16677 (KR); LEE, Kyuho, Suwon-si Gyeonggi-do 16677 (KR); CHOI, Donguk, Suwon-si Gyeonggi-do 16677 (KR); LEE, Inyoung, Suwon-si Gyeonggi-do 16677 (KR); JUNG, Jinwoo, Suwon-si Gyeonggi-do 16677 (KR); CHUN, Jaebong, Suwon-si Gyeonggi-do 16677 (KR)
(74) Representative: HGF
(86) International application number: PCT/KR2022/005351
(87) International publication number: WO 2022/220582

(57) **Abstract**

A wearable electronic device according to various embodiments of the present disclosure may comprise a housing, a conductive patch, a PCB disposed in the housing, a wireless communication circuit disposed on the PCB and a first touch sensing circuit, wherein the housing may comprise a first housing facing away from the body wearing the electronic device, and a second housing facing toward the body, the wireless communication circuit may supply power to a first point spaced apart from an edge of the conductive patch by a specific distance or more and receive an RF signal of a first frequency band, and the first touch sensing circuit may sense a touch input with respect to the conductive patch.

## Description

### [Technical Field]

Embodiments disclosed herein relate to an electronic device including an antenna.

### [Background Art]

Due to the development of technology, an electronic device which outputs audio based on data received via wireless communication is being developed. Such an electronic device may be attached to a part of a user's body (e.g., an ear), and thus the electronic device may be referred to as a wearable electronic device. A wearable electronic device may include an antenna pattern for wireless communication therein.

Meanwhile, a wearable electronic device may include a touch pattern to identify a user's touch input, and may provide various functions in response to the touch input when the wearable electronic device is attached to a part of a user's body (e.g., an ear) and is in use. For example, when there is a user's touch input to a wearable electronic device, the electronic device may play music or stop playing music via a sound application.

### [Disclosure of Invention]

### [Technical Problem]

As a wearable electronic device is gradually miniaturized, an antenna pattern may be spaced apart from a touch pattern by a designated distance or more to avoid interference with the touch pattern. Accordingly, when the wearable electronic device is worn by a user, the antenna pattern may interfere with the user's body due to the separation from the touch pattern, and thus the performance of an antenna may be reduced.

Various embodiments disclosed herein may provide an electronic device using one conductive patch as an antenna pattern and a touch pattern.

### [Solution to Problem]

A wearable electronic device according to various embodiments of the disclosure may include a housing, a conductive patch disposed inside the housing, a printed circuit board (PCB) disposed in the housing, a wireless communication circuit disposed on the PCB, and a first touch sensing circuit disposed on the PCB and electrically connected to the conductive patch, wherein the housing include a first housing facing the outside of a human body and a second housing facing the inside of the human body when the electronic device is worn, the first housing and the second housing are coupled to each other to form an inner space of the electronic device, the wireless communication circuit supplies power to a first point spaced apart from an edge of the conductive patch by a specific distance or more to receive an RF signal of a first frequency band, and the first touch sensing circuit detects touch input to the conductive patch.

A wearable electronic device according to various embodiments of the disclosure may include a housing, a conductive patch disposed in the housing, a printed circuit board (PCB) disposed inside the housing, a wireless communication circuit disposed on the PCB, and a touch sensing circuit disposed on the PCB and electrically connected to the conductive patch, wherein the housing include a first housing facing the outside of a human body and a second housing facing the inside of the human body when the electronic device is worn, the first housing and the second housing are coupled to each other to form an inner space of the electronic device, the wireless communication circuit supplies power to a first point spaced apart from an edge of the conductive patch by a specific distance or more to receive an RF signal of a first frequency band, and the touch sensing circuit detects touch input to the conductive patch, is spaced apart from the edge of the conductive patch by a specific distance or more, and is electrically connected to the conductive patch at a second point of the conductive patch spaced apart from the first point.

### [Advantageous Effects of Invention]

According to various embodiments disclosed herein, an electronic device is able to reduce interference with a user's body by using a conductive patch as both an antenna radiator and a touch pattern.

In addition, according to various embodiments, by using a conductive patch, an electronic device is able to use the directivity of a patch antenna to reduce or minimize the effect on a human body, and is able to prevent deterioration of antenna radiation efficiency.

In addition, according to various embodiments, an electronic device may include an additional conductive pattern, and is able to increase user convenience by identifying a swipe from a conductive patch to an additional conductive pattern and providing a configured function of the electronic device.

In addition to this, various effects identified directly or indirectly via the disclosure may be provided.

### [Brief Description of Drawings]

FIG. 1 is a block diagram of an electronic device 101 in a network environment, according to various embodiments;
FIG. 2A shows a perspective view of an electronic device according to an embodiment;
FIG. 2B shows a perspective view of an electronic device worn on the left ear of a user, according to an embodiment;
FIG. 2C is an exploded view of an electronic device according to an embodiment;
FIG. 3 is a view showing a conductive patch according to an embodiment;
FIG. 4A shows a cross-sectional view of the conductive patch taken along line A-A' shown in FIG. 3 according to an embodiment;
FIG. 4B shows a cross-sectional view of the conductive patch taken along line A-A' according to another embodiment;
FIG. 5 is a conceptual diagram showing an electrical connection relationship among a touch circuit, a wireless communication circuit, and a conductive patch of an electronic device according to an embodiment;
FIG. 6 is a view showing a specific configuration of a first circuit according to an embodiment;
FIG. 7 is a view showing a specific configuration of a second circuit according to an embodiment;
FIG. 8 shows a view in which an electronic device according to an embodiment is worn on the right ear of a user;
FIG. 9 is a view showing radiation efficiency of a patch antenna including a conductive patch according to an embodiment;
FIG. 10 is a view showing a radiation pattern of a patch antenna including a conductive patch according to an embodiment;
FIG. 11 is a view showing a support member including an additional conductive pattern according to an embodiment;
FIG. 12 shows a conceptual diagram of electric connection relationship between an additional conductive pattern and a third touch sensing circuit according to an embodiment;
FIG. 13 is a conceptual diagram showing electric connection relationship between an additional conductive pattern and a wear sensing circuit according to an embodiment;
FIG. 14 is a view showing a first conductive pattern and a second conductive pattern according to another embodiment; and
FIG. 15 is a conceptual diagram showing electric connection relationship among a touch sensing circuit, wireless communication circuit, and the first conductive pattern and the second conductive pattern of FIG. 14 according to an embodiment.

### [Best Mode for Carrying out the Invention]

Hereinafter, various embodiments of the disclosure will be described with reference to the accompanying drawings. However, this is not intended to limit the disclosure to specific embodiments and it should be understood that various modifications, equivalents, or alternatives of the embodiments of the disclosure are included.

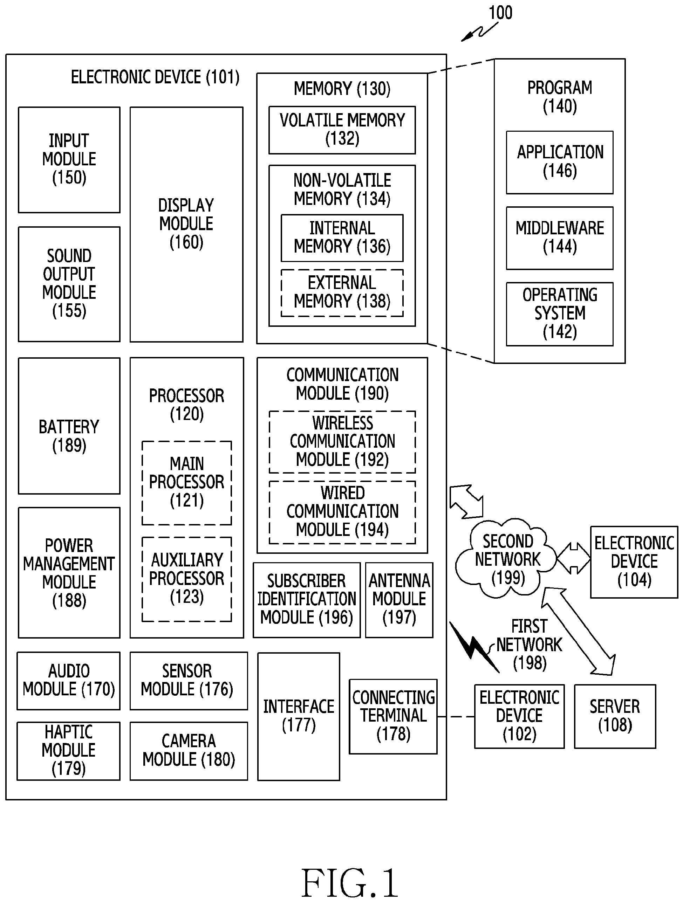

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (LTL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

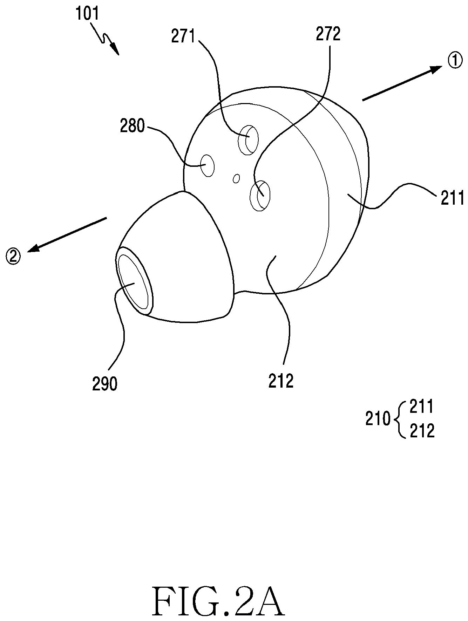

FIG. 2A shows a perspective view of an electronic device according to an embodiment.

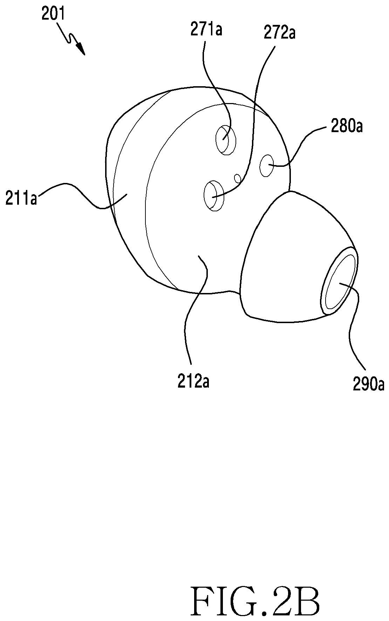

Referring to FIG. 2A, an electronic device 101 according to an embodiment may be a wearable device which is wearable on a part (e.g., an ear) of a human body. For example, the electronic device 101 may be a wearable device which is wearable on the external ear of the ear of a user. In an embodiment, the electronic device 101 may be a wearable electronic device which is worn on the right ear of a user. Although not shown in FIG. 2A, an electronic device (e.g., an electronic device 201 of FIG. 2B) paired with the electronic device 101 may be a wearable electronic device which is worn on the left ear.

According to an embodiment, the electronic device 101 may include a housing 210. The housing 210 may include a first housing 211 and/or a second housing 212. When the electronic device 101 is worn by a user, the first housing 211 may be disposed in a direction facing an outer side of a human body (e.g., direction CD), and the second housing 212 may be disposed in a direction facing an inner side of the human body (e.g., direction (2)). In an embodiment, the first housing 211 and the second housing 212 may be coupled to each other to form an inner space of the electronic device 101, and a plurality of parts (e.g., a printed circuit board (PCB)) may be arranged in the inner space of the electronic device 101. In another embodiment, the first housing 211 and the second housing 212 may be integrally formed.

In an embodiment, in a state in which the electronic device 101 is worn on the body (e.g., an ear) of a user, at least a part of the second housing 212 may be in contact with the body of the user, and at least a part of the first housing 211 may be exposed to the outside.

According to an embodiment, the second housing 212 may include a first charging terminal 271, a second charging terminal 272, a proximity sensor 280, and/or a speaker nozzle unit 290. In an embodiment, the first charging terminal 271 and/or the second charging terminal 272 may be arranged as a pair. When the electronic device 101 is stably seated on an external charging device (not shown) which receives the electronic device 101, the first charging terminal 271 and/or the second charging terminal 272 may be electrically connected to a charging terminal of the external charging device. In an embodiment, the proximity sensor 280 may identify whether the electronic device 101 is located within a designated distance from the user. In an embodiment, the sound output from a speaker disposed inside the housing 210 may be output to the outside of the electronic device 101 via the speaker nozzle unit 290. In an embodiment, the speaker nozzle unit 290 may include at least one opening, and the speaker nozzle unit 290 may include a foreign matter prevention member which prevents foreign matter (e.g., dust, moisture) from entering.

FIG. 2B shows a perspective view of an electronic device worn on the left ear of a user.

Referring to FIG. 2B, an electronic device 201 according to an embodiment may be a wearable electronic device worn on the left ear of a user. According to an embodiment, at least a part of the contents described in FIG. 2A on the premise that the electronic device 101 is a wearable device worn on the right ear may be substantially equally applied to the electronic device 201 worn on the left ear based on symmetrical characteristics. For example, a first housing 211a, a second housing 212a, a first charging terminal 271a, a second charging terminal 272a, a proximity sensor 280a, and a speaker nozzle unit 290a may sequentially correspond to the first housing 211, the second housing 212, the first charging terminal 271, the second charging terminal 272, and the proximity sensor 280 of FIG. 2A, respectively.

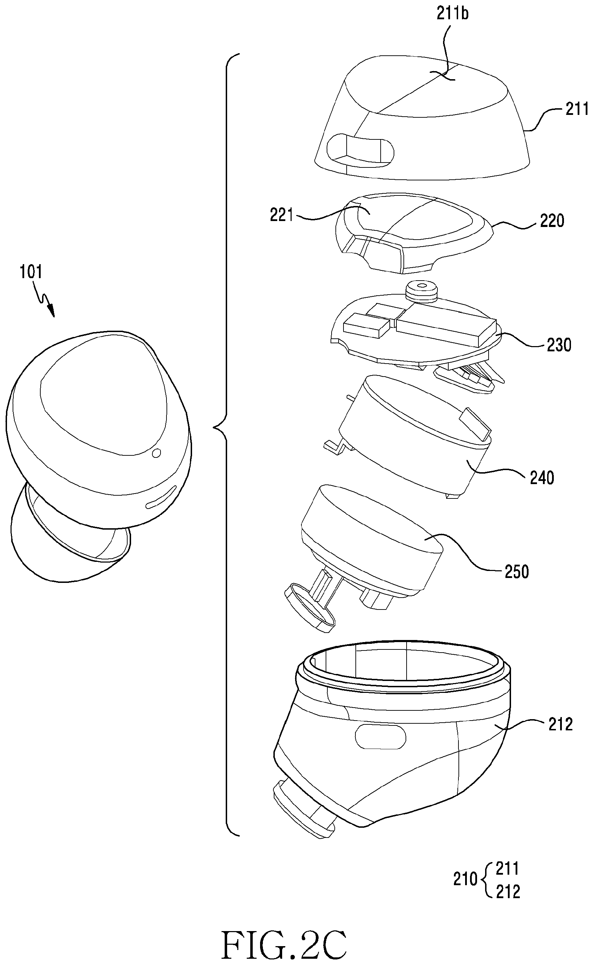

FIG. 2C is an exploded view of an electronic device according to an embodiment.

Referring to FIG. 2C, an electronic device 101 according to an embodiment may include a first housing 211, a support member 220, a PCB 230, a battery 240, a speaker 250, and/or a second housing 212.

According to an embodiment, the support member 220 may be coupled to a conductive patch 221. In an embodiment, the support member 220 may fix the conductive patch 221 to an inner side of a first surface 221b of the first housing 211. For example, the conductive patch 221 may be located at the inner side of the first surface 221b of the first housing 211, which is most adjacent to the exterior of the electronic device 101, and thus the electronic device 101 may reduce interference of the conductive patch 221 by electronic parts inside the electronic device 101. In an embodiment, the conductive patch 221 may be disposed inside the first housing 211. In an embodiment, the support member 220 may include an insulation material (e.g., plastic or resin).

According to an embodiment, a plurality of electronic parts may be arranged on the PCB 230. For example, a processor 120, a wireless communication circuit, a memory 130, a control circuit, and/or an interface 177 may be arranged on the PCB 230. In an embodiment, the PCB 230 may be formed of a material (e.g., FR4) having non-bending properties. According to another embodiment, the PCB 230 may be a flexible printed circuit board (FPCB) having bendable characteristics (or "flexible characteristics").

In another embodiment, in addition to the PCB 230, the electronic device 101 may further include an additional PCB on which multiple electronic parts are arranged.

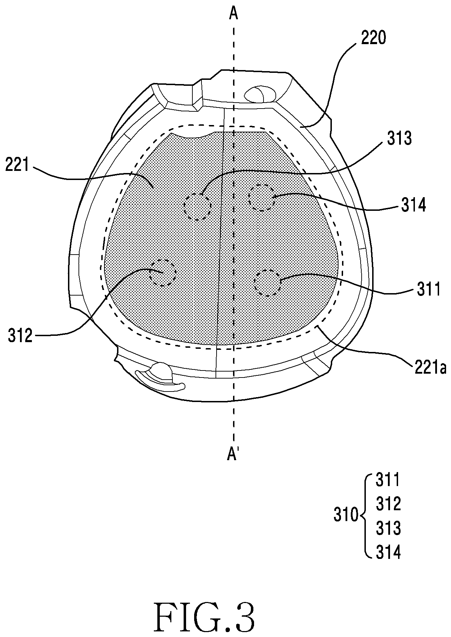

FIG. 3 is a view showing a conductive patch according to an embodiment.

Referring to FIG. 3, the conductive patch 221 according to an embodiment may include at least one designated position spaced apart from an edge 221a of the conductive patch 221 by a specific distance or more. For example, the conductive patch 221 may include a first position 311, a second position 312, a third position 313, and/or a fourth position 314 spaced apart from the edge 221a by a specific distance or more. As another example, the conductive patch 221 may include holes formed in the first position 311, the second position 312, the third position 313, and/or the fourth position 314, respectively.

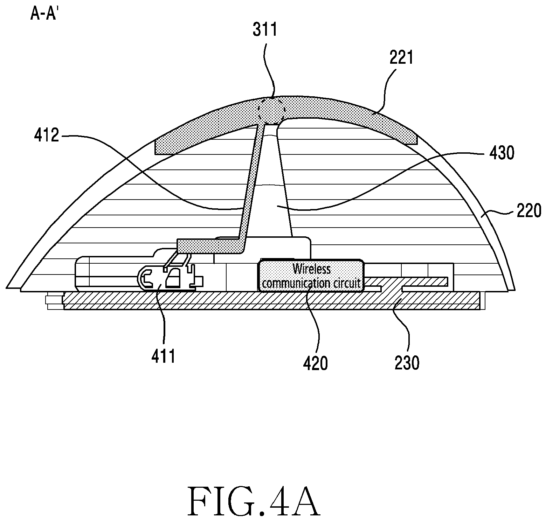

FIG. 4A shows a cross-sectional view of the conductive patch taken along line A-A' shown in FIG. 3 according to an embodiment.

Referring to FIG. 4A, an electronic device 101 according to an embodiment may include a connection member 430 disposed in a space formed between the support member 220 and the PCB 230. In an embodiment, one end of the connection member 430 may extend to the first position 311 of the conductive patch 221. In an embodiment, a conductive line 412 may be formed along a portion of the connection member 430. The conductive line 412 may be formed via various methods. For example, the conductive line 412 may be formed by a laser direct structuring (LDS) method or may be formed by a deposition method. As another example, the conductive line 412 may be formed of a flexible printed circuit board (FPCB), a coaxial cable, or stainless steel (STS).

A wireless communication circuit 420 may be disposed on the PCB 230 according to an embodiment. In an embodiment, the wireless communication circuit 420 may be electrically connected to the conductive patch 221 via a conductive connection member 411 (e.g., a C-clip) and/or the conductive line 412. In an embodiment, the wireless communication circuit 420 may supply power to the conductive patch 221 to transmit and/or receive an RF signal of a first frequency band. In another embodiment, the electronic device 101 may further include a lumped element electrically connected to the conductive patch 221, the wireless communication circuit 420 may transmit and/or receive an RF signal of a second frequency band based on the electrical path including the conductive patch 221 and the lumped element. Therefore, the electronic device 101 may transmit and/or receive RF signals in multiple frequency bands.

Although it is shown that the wireless communication circuit 420 supplies power to the conductive patch 221 via the conductive connection member 411 and the conductive line 412 in the embodiment of FIG. 4A, the wireless communication circuit 420 may supply power to the conductive patch 221 in various other ways in another embodiment. For example, the conductive connection member (e.g., C-clip) disposed on the PCB 230 may be in direct contact with the conductive patch 221, and the wireless communication circuit 420 may supply power to the conductive patch 221 via the conductive connection member (e.g., C-clip). As another example, the wireless communication circuit 420 may supply power to the conductive patch 221 via the conductive path formed on the flexible printed circuit board (FPCB). As still another example, the wireless communication circuit 420 may supply power to the conductive patch 221 via a coaxial cable. In an example, one end of the coaxial cable may be in contact with the first position 311 of the conductive patch 221, and the other end of the coaxial cable may be in electrical contact with the wireless communication circuit 420. As still another example, the wireless communication circuit 420 may supply power to the conductive patch 221 via a screw coupled to the first position 311 of the conductive patch 221.

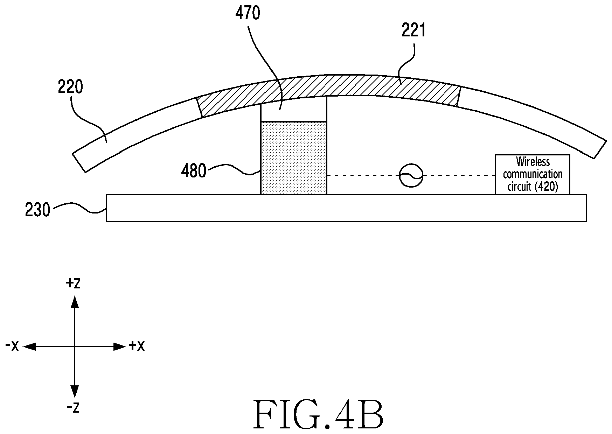

FIG. 4B shows a cross-sectional view of the conductive patch taken along the line A-A' according to another embodiment.

Referring to FIG. 4B, an electronic device 101 according to an embodiment may include a conductive structure 470 located in a first direction (e.g., the -z-axis direction) of the conductive patch 221. The conductive structure 470 may be coupled to the conductive patch 221. For example, the conductive structure 470 may be coupled to the conductive patch 221 via a conductive adhesive member or via a screw. In an embodiment, the conductive structure 470 has been described as a configuration distinct from the conductive patch 221, but is not limited thereto and may be integrally formed with the conductive patch 221. In an embodiment, the conductive structure 470 may include, for example, stainless steel.

According to an embodiment, the electronic device 101 may include a connection member 480 (e.g., C-clip) disposed on the PCB 230, and the connection member 480 may be in contact with the conductive structure 470. In an embodiment, the wireless communication circuit 420 may supply power to the conductive patch 221 via the connection member 480 and the conductive structure 470.

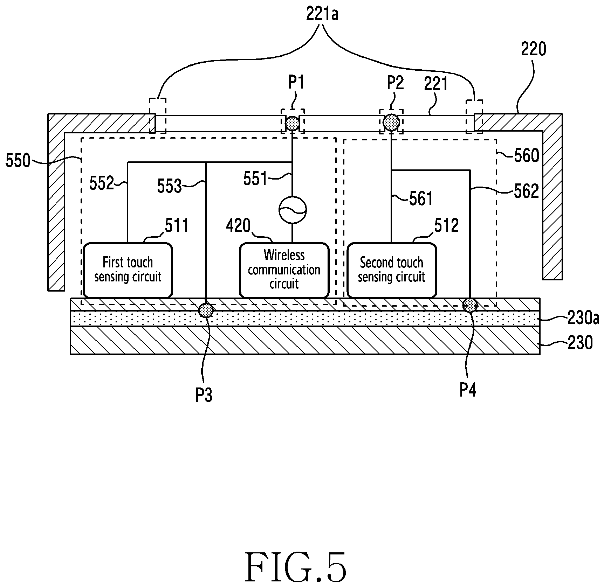

FIG. 5 is a conceptual diagram showing an electrical connection relationship among a touch circuit, a wireless communication circuit, and a conductive patch of an electronic device according to an embodiment.

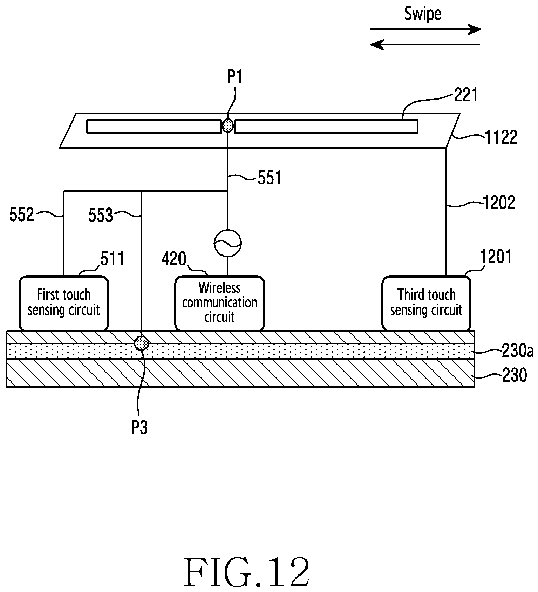

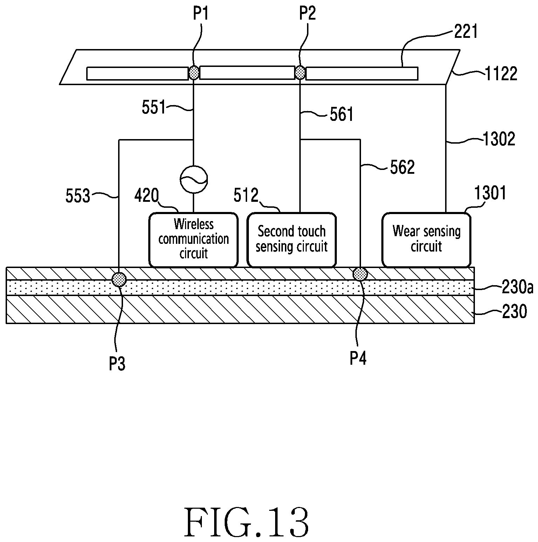

Referring to FIG. 5, an electronic device 101 according to an embodiment may include a first touch sensing circuit 511 and/or a second touch sensing circuit 512 arranged on the PCB 230. In FIG. 5, it has shown that the electronic device 101 includes the first touch sensing circuit 511 and the second touch sensing circuit 512, but the electronic device 101 may selectively include only one of the first touch sensing circuit 511 and the second touch sensing circuit 512. For example, in an embodiment of FIG. 12 to be described later, the electronic device 101 may include the first touch sensing circuit 511 and may not include the second touch sensing circuit 512. As another example, in an embodiment of FIG. 13 to be described later, the electronic device 101 may include the second touch sensing circuit 512 and may not include the first touch sensing circuit 511.

According to an embodiment, the first touch sensing circuit 511, the second touch sensing circuit 512, and the wireless communication circuit 420 connected to the conductive patch 221 may be divided into a first circuit 550 and a second circuit 560. For example, the first touch sensing circuit 511, the second touch sensing circuit 512, and the wireless communication circuit 420 may be divided into the first circuit 550 including the first touch sensing circuit 511 and the wireless communication circuit 420 and the second circuit 560 including the second touch sensing circuit 512. The division of the first circuit 550 and the second circuit 560 is only an example for convenience of explanation and is not limited thereto.

In an embodiment, the wireless communication circuit 420 of the first circuit 550 may supply power to a first point P1 of the conductive patch 221 via a first path 551. With respect to the method in which the wireless communication circuit 420 supplies power to the first point P1 (e.g., the first position 311 of the conductive patch 221) of the conductive patch 221, as described in FIG. 4A, the wireless communication circuit may supply power to the first point P1 via a hole formed through the conductive patch 221 or supply power to the first point P 1 via a conductive connection member (e.g., C-clip). The first point P1 may indicate one point of the conductive patch 221 spaced apart from the edge 221a of the conductive patch 221 by a designated distance or more.

According to an embodiment, the electronic device 101 may minimize the influence on a human body via the wireless communication circuit 420 supplying power to points spaced apart from the edge 221a of the conductive patch 221 by a designated distance or more. In addition, deterioration of radiation efficiency of a patch antenna including the conductive patch 221 due to the influence of the human body may be reduced.

In an embodiment, the first touch sensing circuit 511 may be electrically connected to the conductive patch 221 via the first path 551 and a second path 552. For example, the first touch sensing circuit 511 may be electrically connected to the first path 551 via the second path 552, and as a result, the first touch sensing circuit 511 may be electrically connected to the conductive patch 221 via the first path 551 and the second path 552. In an embodiment, the conductive patch 221 may be electrically connected to a ground 230a of the PCB 230 at a third point P3 via a third path 553. For example, the ground 230a of the PCB 230 may be electrically connected to the second path 552 via the third path 553, and as a result, the ground 230a may be electrically connected to the conductive patch 221 via the first path 551, the second path 552, and the third path 553.

According to an embodiment, the second circuit 560 may include a second touch sensing circuit 512. In an embodiment, the second touch sensing circuit 512 may be electrically connected to a second point P2 (e.g., the third position 313) of the conductive patch 221 via a fourth path 561. In an embodiment, the conductive patch 221 may be electrically connected to the ground 230a of the PCB 230 at a fourth point P4 via a fifth path 562. For example, the ground 230a of the PCB 230 may be electrically connected to the fourth path 561 via the fifth path 562, and as a result, the ground 230a may be electrically connected to the conductive patch 221 via the fourth path 561 and the fifth path 562.

According to an embodiment, the conductive patch 221 may be used as a radiator of a patch antenna, and touch sensing circuits 510 may be used in identifying touch input of a user to the electronic device 101.

In an embodiment, the first touch sensing circuit 511 and/or the second touch sensing circuit 512 may identify a user's touch input to the second housing 212 in various ways. For example, the wireless communication circuit 420 may supply power to the conductive patch 221, and thus the conductive patch 221 may operate as a patch antenna. In an example, as a user touches the electronic device 101, the wireless communication circuit 420 may identify the change of a received signal strength indication (RSSI) of the patch antenna including the conductive patch 221, and may transmit the information relating thereto to the first touch sensing circuit 511. The first touch sensing circuit 511 may identify touch input of the user based on the information on the acquired RSSI change. As another example, the first touch sensing circuit 511 may identify a user's touch input via a change in current of the conductive patch according to the user's touch input.

In an embodiment, it has been described that the first touch sensing circuit 511 and/or the second touch sensing circuit 512 identify a user's touch input, but according to another embodiment, the processor 120 may be electrically connected to the first touch sensing circuit 511 and/or the second touch sensing circuit 512, and may identify a user's touch input to the electronic device 101 based on the information (e.g., RSSI information and current information) acquired from the first touch sensing circuit 511 and/or the second touch sensing circuit 512.

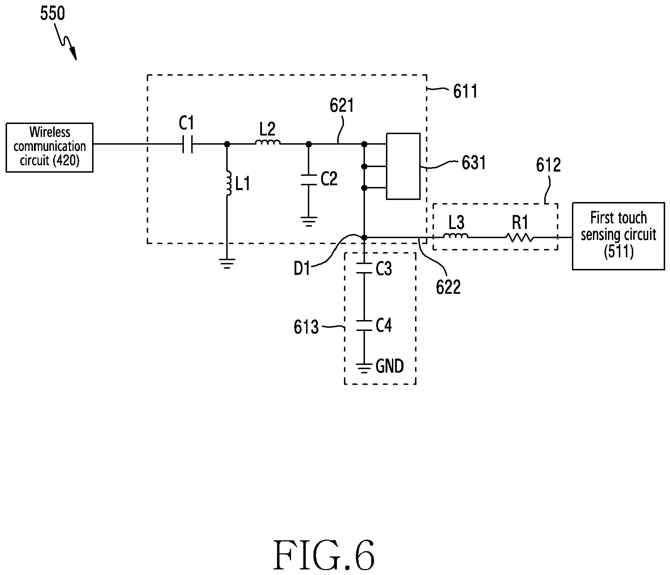

FIG. 6 is a view showing a specific configuration of a first circuit according to an embodiment.

Referring to FIG. 6, a first portion 611 of a first circuit 550 according to an embodiment may be an impedance matching circuit of a patch antenna including a conductive patch 221. The first portion of the first circuit 550 may include at least one lumped element (e.g., an inductor or a capacitor) for impedance matching. For example, the first portion 611 of the first circuit 550 may include a first capacitor C1, a second capacitor C2, a first inductor L1, and/or a second inductor L2. The lumped element included in the first portion 611 of the first circuit 550 is not limited to the configuration shown in FIG. 6, and the first portion 611 may include a combination of additional lumped elements. In an embodiment, the first portion 611 may include a first pad 631. The first pad 631 may indicate a feeding point for supplying power to the conductive patch 221. For example, the wireless communication circuit 420 may supply power to the conductive patch 221 via the first pad 631 and a conductive connection member (e.g., C-clip) located on the first pad 631.

In an embodiment, one end of a second portion 612 of the first circuit 550 may be electrically connected to the first touch sensing circuit 511, and the second portion 612 may block transmission of a radio frequency (RF) signal to the first touch sensing circuit 511. For example, the second portion 612 of the first circuit 550 may include a third inductor L3 for blocking an RF signal. The third inductor L3 of the second portion 612 may block an RF signal of a high frequency band to block the transmission of an RF signal to the first touch sensing circuit 511. In an embodiment, the third inductor L3 may have a designated value. For example, the third inductor L3 may have an inductance value of about 100 nH. In an example, the inductance value of the third inductor L3 may be a value within an inductance range which does not block a touch input signal transmitted to the first touch sensing circuit 511 while blocking an RF signal. In an embodiment, the second portion may include a first resistance R1.

In an embodiment, a third portion 613 of the first circuit 550 may include a lumped element for impedance matching with the ground 230a of the patch antenna including the conductive patch 221. For example, the third portion 613 of the first circuit 550 may include a third capacitor C3 and/or a fourth capacitor C4.

According to an embodiment, the conductive patch 221 may be electrically connected to a ground (e.g., the ground 230a) of the patch antenna via a first conductive path 621. A second conductive path 622 may extend from a first point D1 of the first conductive path 621, and may be electrically connected to the first touch sensing circuit 511.

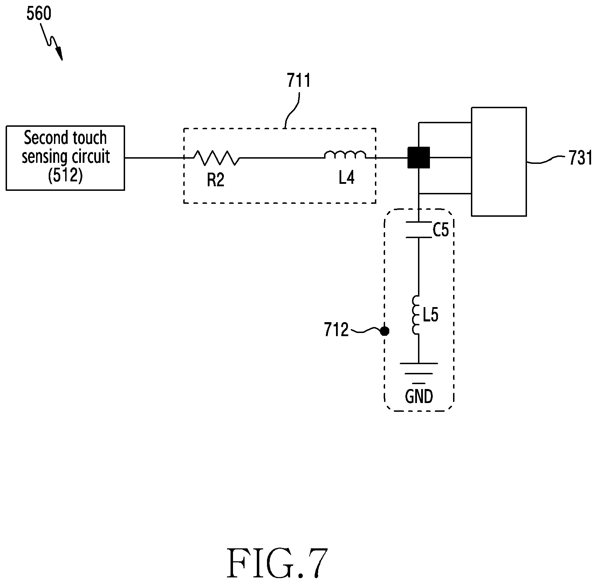

FIG. 7 is a view showing a specific configuration of a second circuit according to an embodiment.

Referring to FIG. 7, one end of a first portion 711 of the second circuit 560 according to an embodiment may be electrically connected to the second touch sensing circuit 512, and the first portion 711 may block the transmission of an RF signal to the second touch sensing circuit 512. For example, the first portion 711 of the second circuit 560 may include a fourth inductor L4 for blocking an RF signal. The inductor of the first portion 711 may block an RF signal of a high frequency band to block the transmission of an RF signal to the second touch sensing circuit 512. In addition, the first portion 711 may include a second resistance R2. As another example, a second portion 712 may include a lumped element for impedance matching with the ground 230a of the patch antenna including the conductive patch 221. For example, the second portion 712 may include a fifth capacitor C5 and/or a fifth inductor L5.

In an embodiment, a second pad 731 may be electrically connected to the first portion 711 and the second portion 712. The second pad 731 may indicate an electrical connection point with the conductive patch 221. For example, the second touch sensing circuit 512 may be electrically connected to the second pad 731 and the conductive patch 221 via a conductive connection member (e.g., C-clip) located on the second pad 731.

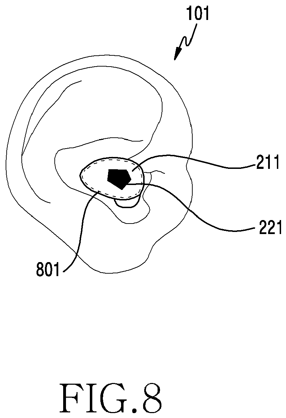

FIG. 8 shows a view in which an electronic device according to an embodiment is worn on the right ear of a user.

Referring to FIG. 8, an electronic device 101 according to an embodiment may be worn on the right ear of a user. In an embodiment, compared to a case in which a conductive patch 221 located under one surface of a first housing 211 is spaced apart from each of the antenna radiator and a conductive pattern for touch input and disposed on a support member 220 separately (hereinafter, separation type), the conductive patch 221 according to an embodiment may be disposed spaced apart by a designated distance or more from a portion 801 at which the electronic device 101 is in contact with the body of a user. Accordingly, the conductive patch 221 may secure a distance greater than or equal to the designated distance from the body, and the electronic device 101 may reduce radiation performance deterioration of the patch antenna.

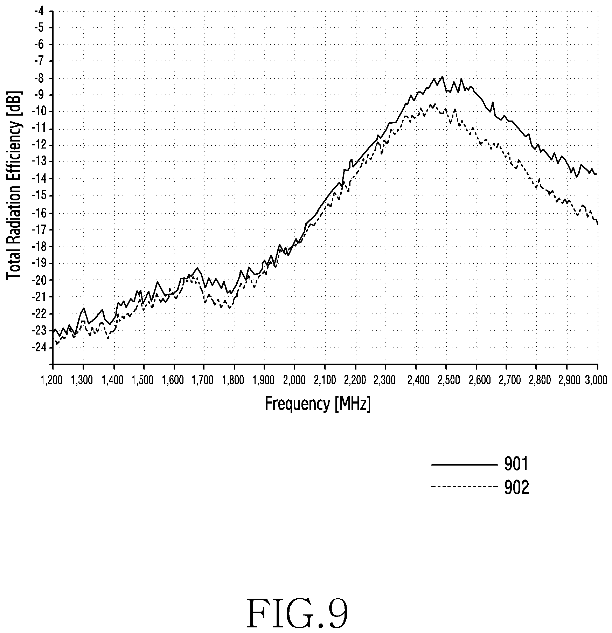

FIG. 9 is a view showing radiation efficiency of a patch antenna including a conductive patch according to an embodiment.

Referring to FIG. 9, a first graph 901 according to an embodiment is a radiation efficiency graph of a patch antenna including a conductive patch 221 when the conductive patch 221 is used as a conductive pattern for an antenna radiator and touch input identification. A second graph 902 is a radiation efficiency graph of an antenna when an antenna radiator and a conductive pattern for touch input identification are separately arranged on the support member 220, respectively (separation type).

The first graph 901 according to an embodiment has an antenna radiation efficiency value higher than that of the second graph 902 by about 1.5 dB in a frequency band of about 2400 to 3000 MHz. In an embodiment, when one conductive patch 221 is used as a conductive pattern for a patch antenna radiator and touch input identification, the electronic device 101 may have better antenna performance, compared to the case where the antenna radiator and the conductive pattern for touch input identification are arranged on the support member 220, respectively (separation type). In an embodiment, the electronic device 101 may have a shape and size of the conductive patch 221 corresponding to a frequency band in which a patch antenna including the conductive patch 221 is desired to operate. In addition, when an antenna radiator and a conductive pattern for touch input identification are arranged on the support member 220, respectively (separation type), the antenna radiator is disposed adjacent to the edge of the support member 220, and thus the separation distance from a human body may be close when the electronic device 101 is worn. Radiation performance of the antenna radiator may be deteriorated due to the influence of the human body. On the other hand, when one conductive patch 221 according to an embodiment is used, the conductive patch 221 is separated from the human body as shown in FIG. 4A, and thus the deterioration of radiation efficiency of the antenna due to the influence of the human body may be reduced.

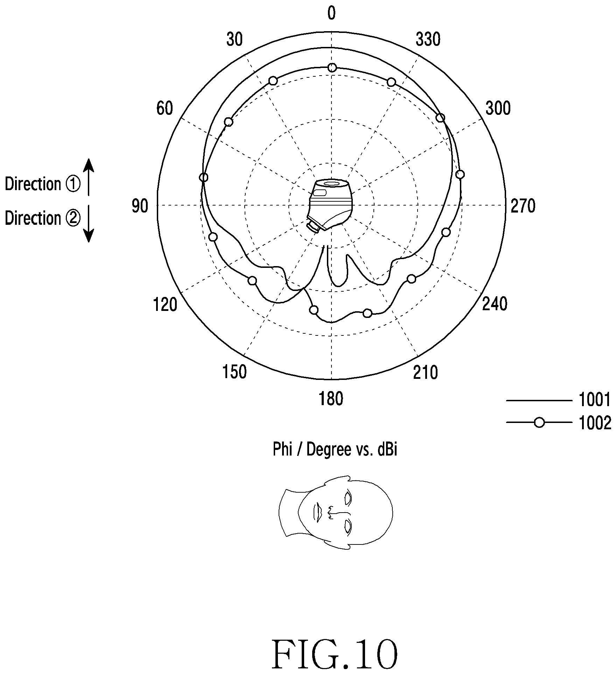

FIG. 10 is a view showing a radiation pattern of a patch antenna including a conductive patch.

Referring to FIG. 10, a first graph 1001 according to an embodiment is a radiation pattern graph of a patch antenna including the conductive patch 221. A second graph 1002 according to a comparative example is a radiation pattern graph of an antenna (e.g., a planar inverted-F antenna (PIFA)) disposed on the support member 220 separately from a conductive pattern for touch input identification.

According to an embodiment, the first graph 1001 has a higher value by about -4 to -5 dBi in a direction toward the outside of a human body (e.g., ① direction), compared to the second graph 1002. In an embodiment, the patch antenna may have a relatively high antenna directivity, compared to the PIFA antenna according to the comparative example. Therefore, the electronic device 101 may have wider communication coverage in a direction toward the outside of a human body (e.g., direction CD) via a patch antenna including the conductive patch 221.

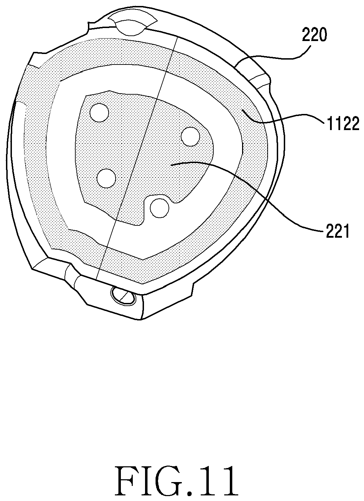

FIG. 11 is a view showing a support member including an additional conductive pattern according to an embodiment.

Referring to FIG. 11, an electronic device 101 according to an embodiment may include an additional conductive pattern 1122 surrounding a conductive patch 221 while being spaced apart from the conductive patch 221 by a designated distance or more. In an embodiment, the additional conductive pattern 1122 may be disposed on the support member 220.

FIG. 12 shows a conceptual diagram of electric connection relationship between an additional conductive pattern and a third touch sensing circuit according to an embodiment.

Referring to FIG. 12, an electronic device 101 according to an embodiment may include a third touch sensing circuit 1201. The third touch sensing circuit 1201 may be electrically connected to an additional conductive pattern 1122 via a conductive connection member 1202. The electronic device 101 according to an embodiment may identify a user's swipe input to the electronic device 101 via the additional conductive pattern 1122. For example, the processor 120 may be electrically connected to a first touch sensing circuit 511 and the third touch sensing circuit 1201. The processor 120 may identify a user's touch input to the conductive patch 221 via the first touch sensing circuit 511 and may identify the user's touch input to the additional conductive pattern 1122 via the third touch sensing circuit 1201. In an example, when a user touches one point of the conductive patch 221 and then inputs a swipe to release the additional conductive pattern 1122, the processor 120 may identify the input via the first touch sensing circuit 511 and the third touch sensing circuit 1201.

According to an embodiment, the processor 120 may perform a function of the electronic device 101, configured in response to a user's swipe input on the electronic device 101. For example, the memory 130 may store information about a configured function corresponding to a swipe input (e.g., a function of adjusting the volume of a voice output via a speaker). In an example, the processor 120 may acquire information on a function configured in response to a swipe input and may perform a function based on the information.

In the embodiment of FIG. 12, it has been described that the third touch sensing circuit 1201 identifies a touch input to the additional conductive pattern 1122, but according to another embodiment, the first touch sensing circuit 511 may be electrically connected to the additional conductive pattern 1122, and the first touch sensing circuit 511 may identify a user's touch input to the additional conductive pattern 1122.

FIG. 13 is a conceptual diagram showing electric connection relationship between an additional conductive pattern and a wear sensing circuit according to an embodiment.

Referring to FIG. 13, an electronic device 101 according to an embodiment may include a wear sensing circuit 1301. The wear sensing circuit 1301 may be electrically connected to an additional conductive pattern 1122 via a conductive connection member 1302.

According to an embodiment, the wear sensing circuit 1301 may determine whether the electronic device 101 is worn on the ear of a user. For example, when the electronic device 101 is worn on the ear of the user, current change of the additional conductive pattern 1122 due to the influence of the human body may be identified by the wear sensing circuit 1301. In an example, the wear sensing circuit 1301 may determine, based on the identified current change, whether the electronic device 101 is worn on the human body. As another example, the wear sensing circuit 1301 may determine whether the electronic device 101 is worn on the human body via a change in the capacitance value of the additional conductive pattern 1122 as the electronic device 101 is worn on the human body.

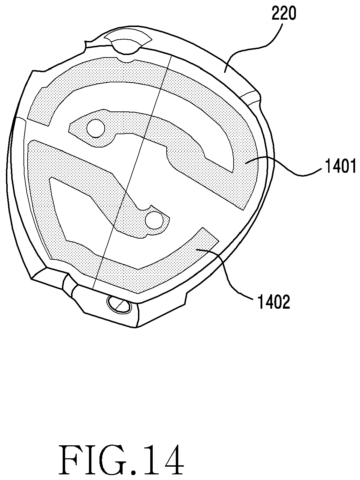

FIG. 14 is a view showing a first conductive pattern and a second conductive pattern according to another embodiment.

Referring to FIG. 14, an electronic device 101 according to an embodiment may include a first conductive pattern 1401 and a second conductive pattern 1402 coupled to a support member 220. In an embodiment, the first conductive pattern 1401 and the second conductive pattern 1402 are not limited to the shape and size shown in FIG. 14 and may have various shapes and sizes corresponding to a frequency band in which an antenna including a conductive pattern is desired to operate.

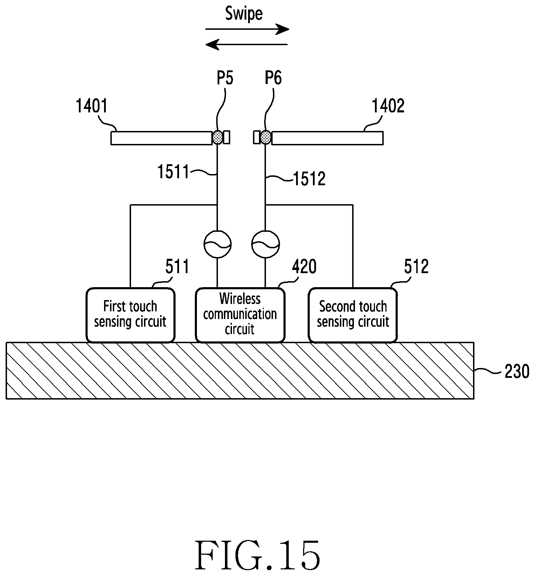

FIG. 15 is a conceptual diagram showing electric connection relationship among a touch sensing circuit, wireless communication circuit, and the first conductive pattern and the second conductive pattern of FIG. 14 according to an embodiment.

Referring to FIG. 15, a wireless communication circuit 420 according to an embodiment may supply power to the first conductive pattern 1401 and/or the second conductive pattern 1402 to transmit and/or receive an RF signal of a designated frequency band. For example, the wireless communication circuit 420 may supply power to a fifth point P5 of the first conductive pattern 1401 via a first conductive connection member 1511 to transmit and/or receive an RF signal of a designated frequency band. In an example, the wireless communication circuit 420 may supply power via a hole corresponding to the fifth point P5 or via a conductive connection member (e.g., C-clip). As another example, the wireless communication circuit 420 may supply power to a sixth point P6 of the second conductive pattern 1402 via a second conductive connection member 1512 to transmit and/or receive an RF signal of a designated frequency band.

According to an embodiment, the first touch sensing circuit 511 may be electrically connected to the first conductive pattern 1401 via the first conductive connection member 1511. In an embodiment, the second touch sensing circuit 512 may be electrically connected to the second conductive pattern 1402 via the second conductive connection member 1512. Therefore, the first conductive pattern 1401 and the second conductive pattern 1402 may be electrically connected to the wireless communication circuit 420 to be used as antenna radiators, and may be electrically connected sequentially to the first touch sensing circuit 511 and the second touch sensing circuit 512, respectively, to be used as conductive patterns for identifying a user's touch input.

The electronic device 101 according to an embodiment may identify a swipe input of a user to the electronic device 101 via the first conductive pattern 1401 and the second conductive pattern 1402. For example, the processor 120 may identify a user's touch input to the first conductive pattern 1401 via the first touch sensing circuit 511, and may identify a user's touch input to the second conductive pattern 1402 via the second touch sensing circuit 512. In an embodiment, when a user inputs a swipe to release the second conductive pattern 1402 after touching one point of the first conductive pattern 1401, the processor 120 may identify the input via the first touch sensing circuit 511 and the second touch sensing circuit 512. In an embodiment, the processor 120 may perform a function of the electronic device 101 (e.g., a function of adjusting the volume of a voice output via a speaker) configured in response to a user's swipe input to the electronic device 101.

An electronic device according to an embodiment may include a housing, a conductive patch disposed inside the housing, a printed circuit board (PCB) disposed in the housing, a wireless communication circuit disposed on the PCB, and a first touch sensing circuit disposed on the PCB and electrically connected to the conductive patch, wherein the housing include a first housing facing the outer side of a human body and a second housing facing the inner side of the human body when the electronic device is worn, the first housing and the second housing are coupled to each other to form an inner space of the electronic device, the wireless communication circuit supplies power to a first point spaced apart from an edge of the conductive patch by a specific distance or more to receive an RF signal of a first frequency band, and the first touch sensing circuit detects touch input to the conductive patch.

An electronic device according to an embodiment may further include a conductive connection member disposed in the inner space of the electronic device, the conductive patch may include a hole corresponding to the first point, the conductive connection member may be coupled to the hole, and the wireless communication circuit may supply power to the first point of the conductive patch via the conductive connection member to receive an RF signal of the first frequency band.

An electronic device according to an embodiment may further include a coaxial cable, the wireless communication circuit may supply power to the first point of the conductive patch via the coaxial cable.

According to an embodiment, the first touch sensing circuit and the conductive patch may be electrically connected to each other at a second point of the conductive patch, spaced apart from the edge of the conductive patch by a specific distance or more and spaced apart from the first point.

According to an embodiment, the PCB may include at least one conductive layer, a portion of the at least one conductive layer may include a ground.

An electronic device according to an embodiment may further include a conductive connection member disposed in the inner space of the electronic device, the conductive patch may include a hole corresponding to a second point of the conductive patch spaced apart from the first point and spaced apart from the edge of the conductive patch by a specific distance or more, and the conductive connection member may be coupled to the hole and electrically coupled to the ground of the PCB.

An electronic device according to an embodiment may further include a first conductive path electrically connecting the conductive patch and the ground to each other and a second conductive path extending from one point of the first conductive path, and the first touch sensing circuit may be electrically connected to the second conductive path.

An electronic device according to an embodiment may further include an inductor disposed on the second conductive path, and the inductor may have a designated inductance value.

According to an embodiment, the first frequency band may include 2.3 to 2.7 GHz.

An electronic device according to an embodiment may further include an additional conductive pattern disposed inside the first housing, the additional conductive pattern may surround the conductive patch while being spaced apart from the conductive patch by a designated distance.

An electronic device according to an embodiment may further include a second touch sensing circuit, and the second touch sensing circuit may be electrically connected to the additional conductive pattern and may detect a touch input to the additional conductive pattern.

An electronic device according to an embodiment may further include at least one processor electrically connected to the first touch sensing circuit and the second touch sensing circuit, and the at least one processor may identify a swipe input to the additional conductive pattern from the conductive patch and may perform a pre-configured function of the electronic device in response to the identified swipe input.

An electronic device according to an embodiment may further include at least one processor electrically connected to the additional conductive pattern, and the at least one processor may identify a change in a capacitance value of the additional conductive pattern and may determine, based on the identified change in the capacitance value, whether the electronic device is worn.

An electronic device according to an embodiment may further include a lumped element electrically connected to the conductive patch, and the wireless communication circuit may receive a signal of a second frequency band based on an electrical path including the conductive patch and the lumped element.

An electronic device according to an embodiment may further include a support member coupled to the conductive patch.

An electronic device according to an embodiment may include a housing, a conductive patch disposed in the housing, a printed circuit board (PCB) disposed inside the housing, a wireless communication circuit disposed on the PCB, and a touch sensing circuit disposed on the PCB and electrically connected to the conductive patch, wherein the housing include a first housing facing the outer side of a human body and a second housing facing the inner side of the human body when the electronic device is worn, the first housing and the second housing are coupled to each other to form an inner space of the electronic device, the wireless communication circuit supplies power to a first point spaced apart from an edge of the conductive patch by a specific distance or more to receive an RF signal of a first frequency band, and the touch sensing circuit detects touch input to the conductive patch, is spaced apart from the edge of the conductive patch by a specific distance or more, and is electrically connected to the conductive patch at a second point of the conductive patch spaced apart from the first point.

An electronic device according to an embodiment may further include a conductive connection member disposed in the inner space of the electronic device, the conductive patch may include a hole corresponding to a first point, the conductive connection member may be coupled to the hole, and the wireless communication circuit may supply power to the first point of the conductive patch via the conductive connection member to receive an RF signal of the first frequency band.

An electronic device according to an embodiment may further include a coaxial cable, and the wireless communication circuit may supply power to the first point of the conductive patch via the coaxial cable.

An electronic device according to an embodiment may further include an additional conductive pattern disposed inside the first housing, and the additional conductive pattern may surround the conductive patch while being spaced apart from the conductive patch by a designated distance.

According to an embodiment, the first frequency band may include 2.3 to 2.7 GHz.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device comprising:
a housing including a first housing and a second housing, wherein the first housing faces an outside of a human body and the second housing faces an inside of the human body in case that the electronic device is worn on the human body, and the first housing and the second housing are coupled to each other to form an inner space of the electronic device;
a conductive patch disposed inside the first housing;
a printed circuit board (PCB) disposed in the housing;
a wireless communication circuit disposed on the PCB; and
a first touch sensing circuit disposed on the PCB and electrically connected to the conductive patch,
wherein the wireless communication circuit is configured to supply power to a first point spaced apart from an edge of the conductive patch by a specific distance or more to receive an RF signal of a first frequency band, and
wherein the first touch sensing circuit is configured to detect touch input to the conductive patch.

2. The wearable electronic device of claim 1, further comprising a conductive connection member disposed in the inner space of the electronic device,
wherein the conductive patch comprises a hole corresponding to the first point,
wherein the conductive connection member is coupled to the hole, and
wherein the wireless communication circuit is configured to supply power to the first point of the conductive patch via the conductive connection member to receive an RF signal of the first frequency band.

3. The wearable electronic device of claim 1, further comprising a coaxial cable,
wherein the wireless communication circuit is configured to supply power to the first point of the conductive patch via the coaxial cable.

4. The wearable electronic device of claim 1, wherein the first touch sensing circuit and the conductive patch are electrically connected to each other at a second point of the conductive patch, the second point being spaced apart from the edge of the conductive patch by a specific distance or more and spaced apart from the first point.

5. The wearable electronic device of claim 1, wherein the PCB comprises at least one conductive layer, and
wherein a portion of the at least one conductive layer comprises a ground.

6. The wearable electronic device of claim 5, further comprising a conductive connection member disposed in the inner space of the electronic device,
wherein the conductive patch comprises a hole corresponding to a second point of the conductive patch spaced apart from the first point and spaced apart from the edge of the conductive patch by a predetermined distance or more, and
wherein the conductive connection member is coupled to the hole and electrically coupled to the ground of the PCB.

7. The wearable electronic device of claim 5, further comprising:
a first conductive path electrically connecting the conductive patch and the ground to each other; and
a second conductive path extending from one point of the first conductive path,
wherein the first touch sensing circuit is electrically connected to the second conductive path.

8. The wearable electronic device of claim 7, further comprising an inductor disposed on the second conductive path,
wherein the inductor has a designated inductance value.

9. The wearable electronic device of claim 1, wherein the first frequency band comprises 2.3 to 2.7 GHz.

10. The wearable electronic device of claim 1, further comprising an additional conductive pattern disposed inside the first housing,
wherein the additional conductive pattern surrounds the conductive patch while being spaced apart from the conductive patch by a designated distance.

11. The wearable electronic device of claim 10, further comprising a second touch sensing circuit,
wherein the second touch sensing circuit is electrically connected to the additional conductive pattern, and is configured to detect a touch input to the additional conductive pattern.

12. The wearable electronic device of claim 11, further comprising at least one processor electrically connected to the first touch sensing circuit and the second touch sensing circuit,
wherein the at least one processor is configured to:
identify a swipe input to the additional conductive pattern from the conductive patch; and
perform a pre-configured function of the electronic device in response to the identified swipe input.

13. The wearable electronic device of claim 10, further comprising at least one processor electrically connected to the additional conductive pattern,
wherein and the at least one processor is configured to:
identify a change of a capacitance value of the additional conductive pattern; and
determine, based on the identified change of the capacitance value, whether the electronic device is worn.

14. The wearable electronic device of claim 1, further comprising a lumped element electrically connected to the conductive patch,
wherein the wireless communication circuit is configured to receive a signal of a second frequency band based on an electrical path including the conductive patch and the lumped element.

15. The wearable electronic device of claim 1, further comprising a support member coupled to the conductive patch.
